# FASCICULE DE BREVET EUROPEEN

(11) **EP 3 562 316 B1**
(45) Date de publication et mention de la délivrance du brevet: **20.11.2024**
(21) Numéro de dépôt: 17715223.8
(22) Date de dépôt: 10.03.2017
(51) Int. Cl.: A23K 10/20, A23K 40/10

(54) **PROCÉDÉ DE TRAITEMENT D'INSECTES COMPRENANT LA SÉPARATION DES CUTICULES DE LA PARTIE MOLLE DES INSECTES PUIS LA SÉPARATION DE LA PARTIE MOLLE EN TROIS FRACTIONS**
VERFAHREN ZUR BEHANDLUNG VON INSEKTEN, BEI DEM DIE CUTICULA VOM WEICHTEIL DER INSEKTEN GETRENNT, UND DER WEICHE ANTEIL DANN IN DREI FRAKTIONEN SEPARIERT WIRD
METHOD FOR TREATING INSECTS, IN WHICH THE CUTICLES ARE SEPARATED FROM THE SOFT PART OF THE INSECTS, AND THE SOFT PART IS THEN SEPARATED INTO THREE FRACTIONS

(30) Priorité: 28.12.2016 FR 1663478
(43) Date de publication de la demande: 06.11.2019
(73) Titulaire: Ynsect, 91058 Evry Cedex (FR)
(72) Inventeur: LAURENT, Sophie, 75013 Paris (FR); SARTON DU JONCHAY, Thibault, 60710 Chevrières (FR); LEVON, Jean-Gabriel, 75011 Paris (FR); SOCOLSKY, Cecilia, 75013 Paris (FR); SANCHEZ, Lorena, 91260 Juvisy (FR); BEREZINA, Nathalie, 75005 Paris (FR); ARMENJON, Benjamin, 75013 Paris (FR); HUBERT, Antoine, 94140 Alfortville (FR)
(74) Mandataire: Santarelli
(86) Numéro de dépôt international: PCT/FR2017/050554
(87) Numéro de publication internationale: WO 2018/122476

(56) Documents cités:
- EP-A1- 3 078 277
- WO-A1-2014/123420
- CA-A1- 2 670 245
- CN-A- 102 558 387
- CN-A- 102 578 390
- CN-A- 102 696 740
- VERKERK ET AL: "Insect cells for human food", BIOTECHNOLOGY ADVAN, ELSEVIER PUBLISHING, BARKING, GB, vol. 25, no. 2, 26 January 2007 (2007-01-26), pages 198 - 202, XP005862316, ISSN: 0734-9750, DOI: 10.1016/J.BIOTECHADV.2006.11.004
- SÁNCHEZ-MUROS MARÍA-JOSÉ ET AL: "Insect meal as renewable source of food for animal feeding: a review", JOURNAL OF CLEANER PRODUCTION, vol. 65, 4 December 2013 (2013-12-04), pages 16 - 27, XP028607806, ISSN: 0959-6526, DOI: 10.1016/J.JCLEPRO.2013.11.068
- LARRY NEWTON ET AL: "USING THE BLACK SOLDIER FLY, Hermetia illucens, AS A VALUE-ADDED TOOL FOR THE MANAGEMENT OF SWINE MANURE", 6 June 2005 (2005-06-06), XP055085218, Retrieved from the Internet <URL:http://www.urbantilth.org/wp-content/uploads/2008/09/soldierfly-swine-manure-management.pdf>
- XIA W ET AL: "Extracting chitin and antimicrobial peptide from maggot, involves extruding fresh maggot in press roll and obtaining maggot skin for extracting chitin and visceral fluid for extracting antimicrobial peptide", WPI / THOMSON,, vol. 2013, no. 1, 11 July 2012 (2012-07-11), XP002747930

## Description

La présente invention se rapporte à un procédé de traitement d'insectes. La présente demande divulgue également des poudres, en particulier une poudre susceptible d'être obtenue par le procédé de traitement d'insectes selon l'invention, et l'utilisation de ces poudres dans l'alimentation, notamment dans l'alimentation animale.

Les poudres préparées à partir d'animaux sont depuis longtemps utilisées dans l'alimentation animale.

L'une des poudres les plus utilisée est la farine de poisson, qui représente une des principales sources de protéines dans l'alimentation animale. La farine de poisson est très riche en protéines animales (riche en acides aminés type lysine et méthionine) faciles à digérer. Une demande croissante accompagnée d'une offre limitée a eu pour conséquence, notamment, d'en augmenter significativement son prix. Ainsi, il y a une forte demande pour des sources alternatives de protéines de qualité élevée et, dans la mesure du possible, renouvelables, qui seraient utilisables dans l'alimentation animale.

Au cours de ces dernières années, il a été proposé d'utiliser des farines préparées à partir d'insectes comme substituant à la farine de poisson.

Le document WO 2014/123420 A1 concerne un procédé pour convertir des insectes en courants de nutriments, tels qu'une fraction contenant des matières grasses, une fraction aqueuse contenant des protéines et une fraction contenant des matières solides. Le procédé comprend les étapes de: (a) écraser des insectes ou des vers, ce qui permet d'obtenir une pâte, les insectes ou les vers étant réduits en dimension, (b) chauffer la pâte jusqu'à une température de 70-100°C et (c) soumettre la pâte chauffée à une étape de séparation physique, de préférence une décantation et/ou centrifugation, à la condition que le procédé ne comprend pas de traitement enzymatique de la pâte.

Le document EP 3 078 277 A1 divulgue une méthode de fabrication de poudre d'insectes comprenant le séchage des insectes avec de l'air à une température comprise entre 100°C et 180°C ; et le broyage des insectes pour obtenir une poudre, dans laquelle la poudre a une activité en eau inférieure à 0,7.Les farines d'insectes proposent des sources protéiques naturelles de remplacement et la possibilité d'être produites en masse avec une empreinte écologique minimale. En particulier, certains coléoptères tels que Tenebrio molitor, présentent l'intérêt de pouvoir être adaptés à une production en masse intensive.

A titre d'exemple, la demande WO2016/108037 décrit notamment une poudre de coléoptères comportant au moins 67% en poids de protéines et au moins 5% en poids de chitine, pouvant être utilisée dans l'alimentation animale. Dans le cadre de la présente demande, par « chitine », on entend tout type de dérivé chitinique, c'est-à-dire de dérivé de polysaccharides comportant des unités N-acétyl-glucosamine et des unités D-glucosamines, en particulier les copolymères chitine-polypeptides (parfois désignés sous l'appellation « composite chitine-polypeptides »). Ces copolymères peuvent également être associés à des pigments, souvent de type mélanine.

La chitine serait le deuxième polymère le plus synthétisé dans le monde vivant après la cellulose. En effet, la chitine est synthétisée par de nombreuses espèces du monde vivant: elle constitue en partie l'exosquelette des crustacés et des insectes et la paroi latérale qui entoure et protège les champignons. Plus particulièrement, chez les insectes, la chitine constitue ainsi 3 à 60% de leur exosquelette.

Cependant, la chitine est généralement considérée comme un composé difficile à digérer par certains animaux.

Il existe donc un besoin pour des poudres préparées à partir d'insectes qui auraient une teneur réduite en chitine.

Le travail des inventeurs a permis de mettre en évidence qu'il était possible d'obtenir de tels poudres, lorsque les insectes à partir desquels sont préparées ces poudres subissaient un traitement spécifique.

L'invention concerne donc un procédé de traitement d'insectes comprenant les étapes suivantes :
- la séparation des cuticules de la partie molle des insectes, puis
- la séparation de la partie molle des insectes en une fraction huileuse, une fraction solide et une fraction aqueuse.

Par « insectes », on entend des insectes à n'importe quel stade de développement, tel qu'un stade adulte, larvaire ou un stade de nymphe.

La cuticule est la couche externe (ou exosquelette) sécrétée par l'épiderme des insectes. Elle est en général formée de trois couches : l'épicuticule, l'exocuticule et l'endocuticule.

Par « partie molle », on vise la chair (comportant notamment les muscles et les viscères) et le jus (comportant notamment les liquides biologiques, l'eau et l'hémolymphe) des insectes. En particulier, la partie molle ne consiste pas en le jus des insectes.

Avantageusement, les insectes mis en oeuvre dans le procédé selon l'invention sont à un stade larvaire.

De préférence, les insectes mis en oeuvre dans le procédé selon l'invention sont comestibles.

Avantageusement, les insectes préférés pour la mise en oeuvre du procédé selon l'invention sont par exemple les coléoptères, les diptères, les lépidoptères, les isoptères, les orthoptères, les hyménoptères, les blattoptères, les hémyptères, les hétéroptères, les éphéméroptères et les mécoptères, de préférence, les coléoptères, les diptères, les orthoptères, les lépidoptères ou leurs mélanges, encore plus préférentiellement les coléoptères.

Les coléoptères préférentiellement mis en oeuvre dans le procédé selon l'invention appartiennent aux familles des Tenebrionidae, Melolonthidae , Dermestidae, Coccinellidae, Cerambycidae, Carabidae, Buprestidae, Cetoniidae, Dryophthoridae, ou leurs mélanges.

Plus préférentiellement, il s'agit des coléoptères suivants : *Tenebrio molitor, Alphitobius diaperinus, Zophobas morio, Tenebrio obscurus, Tribolium castaneum et Rhynchophorus ferrugineus,* ou leurs mélanges.

La fraction huileuse a une teneur en lipides supérieure ou égale à 90%, préférentiellement supérieure ou égale à 95%, encore plus préférentiellement supérieure ou égale à 99% en poids sur le poids total de fraction huileuse.

On notera que dans le cadre de la présente demande, et sauf stipulation contraire, les gammes de valeurs indiquées s'entendent bornes incluses.

La fraction solide a une teneur en matière sèche comprise entre 45 et 65% en poids sur le poids total de fraction solide.

La fraction aqueuse a une teneur en glucides comprise entre 15 et 40% en poids, de préférence entre 20 et 30% en poids, sur le poids sec total de fraction aqueuse.

A l'issue de l'étape de séparation de la partie molle, et avant une concentration éventuelle de celle-ci, la fraction aqueuse a une teneur en matière sèche inférieure ou égale à 20% en poids, de préférence inférieure ou égale à 15% en poids sur le poids total de fraction aqueuse.

Selon un premier mode de réalisation, la séparation des cuticules de la partie molle des insectes est effectuée à l'aide d'un filtre presse.

Un filtre presse est composé de toiles filtrantes, et permet une séparation selon le principe de filtration sous pression.

Selon un second mode de réalisation, la séparation des cuticules de la partie molle des insectes est effectuée à l'aide d'un séparateur à bande.

Par séparateur à bande, on vise un dispositif permettant la séparation de la partie solide de la partie molle d'un produit, et qui comporte une bande de serrage (ou bande presseuse) et un tambour perforé.

La séparation des cuticules de la partie molle des insectes est plus amplement décrite dans l'étape 2 du procédé détaillé de traitement d'insectes selon l'invention ci-après.

Cette séparation des cuticules de la partie molle de l'insecte permet notamment de séparer la chitine de la partie molle. En effet, les cuticules obtenues à l'issue de cette étape de séparation présentent une teneur en chitine élevée de l'ordre de 10 à 30% en poids sur le poids total de cuticules, comme indiqué ci-après.

En particulier, l'étape de séparation des cuticules de la partie molle s'effectue sans qu'aucune étape préalable de broyage des insectes, notamment sous forme de particules, n'ait été effectuée.

De même, la séparation de la partie molle des insectes en une fraction huileuse, une fraction solide et une fraction aqueuse est plus amplement décrite dans l'étape 4 du procédé détaillé de traitement d'insectes selon l'invention ci-après.

Le procédé de traitement d'insectes selon l'invention peut comprendre une étape d'abattage préalable à l'étape de séparation des cuticules de la partie molle.

Avantageusement, suite à l'étape 1 d'abattage, les insectes sont directement utilisés pour la mise en oeuvre de l'étape 2 de séparation des cuticules de la partie molle des insectes, c'est-à-dire que les insectes ne sont soumis à aucun traitement, tel qu'un broyage, une congélation ou une déshydratation entre l'étape 1 et l'étape 2.

Cette étape d'abattage est plus amplement décrite dans l'étape 1 du procédé détaillé de traitement d'insectes selon l'invention ci-après.

Optionnellement, le procédé de traitement d'insectes selon l'invention comprend en outre une étape de maturation de la partie molle des insectes, entre l'étape de séparation des cuticules de la partie molle et l'étape de séparation de la partie molle des insectes en une fraction huileuse, une fraction solide et une fraction aqueuse.

Par « étape de maturation de la partie molle des insectes », on vise plus particulièrement une étape pendant laquelle la partie molle des insectes est soumise à agitation.

Cette étape est plus amplement décrite dans l'étape 3 du procédé détaillé de traitement d'insectes selon l'invention ci-après.

Optionnellement, le procédé de traitement d'insectes selon l'invention comprend une étape de concentration de la fraction aqueuse, pour obtenir une fraction aqueuse concentrée.

Cette étape est plus amplement décrite dans l'étape 5 du procédé détaillé de traitement d'insectes selon l'invention ci-après.

Optionnellement, le procédé de traitement d'insectes selon l'invention comprend en outre une étape de mélangeage de la fraction solide :
- avec tout ou partie de la fraction aqueuse concentrée ; et/ou
- tout ou partie des cuticules,
pour obtenir un mélange.

Cette étape est plus amplement décrite dans l'étape 6 du procédé détaillé de traitement d'insectes selon l'invention ci-après.

De préférence, le procédé de traitement d'insectes selon l'invention comprend une étape de séchage de la fraction solide ou du mélange pour obtenir une fraction solide sèche ou un mélange sec, respectivement.

Cette étape est plus amplement décrite dans l'étape 7 du procédé détaillé de traitement d'insectes selon l'invention ci-après.

Préférentiellement, le procédé de traitement d'insectes selon l'invention comprend en outre une étape de broyage de la fraction solide sèche ou du mélange sec.

Cette étape est plus amplement décrite dans l'étape 8 du procédé détaillé de traitement d'insectes selon l'invention ci-après.

Selon un mode de réalisation préféré du procédé de traitement d'insectes selon l'invention, celui-ci est un procédé de préparation d'une poudre, et notamment d'une poudre d'insectes, et comporte les étapes suivantes :
i) l'abattage des insectes ;
ii) la séparation des cuticules de la partie molle des insectes ;
iii) optionnellement, la maturation de la partie molle des insectes ;
iv) la séparation de la partie molle des insectes en une fraction solide, une fraction aqueuse et une fraction huileuse ;
v) optionnellement, la concentration de la fraction aqueuse pour obtenir une fraction aqueuse concentrée ;
vi) optionnellement, le mélangeage de la fraction aqueuse concentrée et/ou des cuticules avec la fraction solide pour obtenir un mélange ;
vii) le séchage de la fraction solide obtenue à l'étape iv) ou du mélange obtenu à l'étape vi) pour obtenir une fraction solide sèche ou un mélange sec ; et
viii) le broyage de la fraction solide sèche ou du mélange sec obtenu à l'étape vii).

### Procédé détaillé de traitement d'insectes selon l'invention

### • Etape 1 : Abattage des insectes

Cette étape 1 d'abattage peut avantageusement s'effectuer par choc thermique, tel que par ébouillantage ou par blanchiment. Cette étape 1 permet d'abattre les insectes tout en abaissant la charge microbienne (réduction du risque d'altération et sanitaire) et en inactivant les enzymes internes des insectes pouvant déclencher une autolyse, et ainsi un brunissement rapide de ceux-ci.

Pour l'ébouillantage, les insectes, de préférence des larves, sont ainsi ébouillantés à l'eau pendant 2 à 20 min, préférentiellement, 5 à 15 min. De préférence, l'eau est à une température comprise entre 87 à 100°C, préférentiellement 92 à 95°C.

La quantité d'eau introduite lors de l'ébouillantage est déterminée de la façon suivante : le ratio du volume d'eau en ml sur le poids en g d'insecte est de préférence compris entre 0,3 et 10, plus préférentiellement entre 0,5 et 5, encore plus préférentiellement entre 0,7 et 3, encore plus préférentiellement de l'ordre de 1.

Pour le blanchiment, les insectes, de préférence des larves, sont blanchis à l'eau ou à la vapeur (buses ou lit de vapeur) à une température comprise entre 80 et 105°C, de préférence entre 87 et 105°C, plus préférentiellement entre 95 et 100°C, encore plus préférentiellement 98°C ou bien à l'eau à une température comprise entre 90 et 100°C, préférentiellement entre 92 et 95°C (par buses d'aspersion) ou en mode mixte (eau + vapeur) à une température comprise entre 80 et 130°C, de préférence entre 90 et 120°C, plus préférentiellement entre 95 et 105°C, encore plus préférentiellement 98°C. Lorsque les insectes sont blanchis uniquement à la vapeur, le blanchiment est avantageusement réalisé dans des blancheurs à vapeur à circulation forcée (« forced steaming »). Le temps de séjour dans la chambre de blanchiment est compris entre 5 secondes et 15 minutes, préférentiellement entre 1 et 7 min.

Avantageusement, suite à l'étape 1 d'abattage, les insectes sont directement utilisés pour la mise en oeuvre de l'étape 2 de séparation des cuticules de la partie molle des insectes, c'est-à-dire que les insectes ne sont soumis à aucun traitement, tel qu'un broyage, une congélation ou une déshydratation entre l'étape 1 et l'étape 2.

### • Etape 2 : Séparation des cuticules de la partie molle des insectes

L'étape 2 a pour objectif de séparer les cuticules de la partie molle des insectes.

La séparation des cuticules de la partie molle des insectes peut être effectuée à l'aide de tout type de séparateur adapté.

Selon un premier mode de réalisation, la séparation des cuticules de la partie molle est réalisée à l'aide d'un filtre presse.

Avantageusement, le filtre presse utilisé dans le procédé de traitement d'insectes selon l'invention est un filtre presse à bandes.

Un filtre presse à bandes comporte deux bandes de serrage perforées (également appelées « toiles filtrantes »). Les insectes sont placés entre les deux bandes de serrage perforées de sorte à faire passer, par pression, la partie molle des insectes à travers les perforations des bandes de serrage, tandis que la partie solide des insectes restent entre les 2 bandes de serrage perforées.

L'homme du métier est à même de déterminer le diamètre des perforations des bandes de serrage ainsi que la pression à exercer, permettant la séparation des cuticules de la partie molle des insectes.

A titre d'exemple, on peut citer le filtre presse à bandes (ou « presse à bandes ») provenant de la société Flottweg, ou encore les filtres presses à bandes de la société ATR Créations.

Selon un second mode de réalisation, la séparation des cuticules de la partie molle est réalisée à l'aide d'un séparateur à bande.

A titre d'exemple, un séparateur à bande peut comprendre une bande de serrage et un tambour perforé, la bande de serrage entourant au moins une partie du tambour perforé.

La bande de serrage permet l'apport et l'application des insectes contre le tambour perforé de sorte à faire passer, par pression, la partie molle des insectes à travers les perforations du tambour, tandis que la partie solide des insectes (cuticules) reste à l'extérieur du tambour.

Les cuticules peuvent ensuite être récupérées à l'aide d'un couteau racleur.

A titre d'exemple, on peut citer les séparateurs à bande provenant de la société Baader, tels que les séparateurs à bande 601 à 607 (« soft separator 601 to 607 »), ou encore les séparateurs à bande SEPAmatic^{®} de BFD Corporation (gamme 410 à 4000V).

Avantageusement, le diamètre des perforations du tambour est compris entre 0,5 et 3 mm, de préférence entre 1 et 2 mm.

Concernant la pression, l'homme du métier est à même de déterminer la pression à exercer permettant la séparation des cuticules de la partie molle des insectes.

Cette étape de séparation des insectes se distingue d'un pressage classique pouvant être réalisé par exemple avec une presse mono-vis ou bi-vis en ce qu'elle permet une séparation (nette) de la partie molle et des cuticules des insectes et non une séparation d'un jus d'une fraction solide.

Avantageusement, la séparation des cuticules de la partie molle des insectes est effectuée à l'aide d'un séparateur à bande.

Les cuticules obtenues dans l'étape 2 comportent entre 10 et 30%, de préférence entre 15 et 25% en poids de chitine, sur le poids sec total de cuticules.

La détermination du taux de chitine est effectuée par extraction de celle-ci. A titre d'exemple, une méthode de détermination du taux de chitine pouvant être utilisée est la méthode ADAC 991.43.

Par ailleurs, les cuticules comportent moins de 25%, de préférence moins de 10%, plus préférentiellement moins de 5%, encore plus préférentiellement moins de 3% en poids de lipides sur le poids sec total des cuticules.

Les méthodes de détermination de la teneur en matière grasse (lipides) sont bien connues de l'homme du métier. A titre d'exemple et de manière préférée, la détermination de cette teneur sera effectuée en suivant la méthode du règlement CE 152/2009.

Dans toute la demande, lorsqu'aucune date n'est précisée pour un règlement, une norme ou une directive, il s'agit du règlement, de la norme ou de la directive en vigueur à la date de dépôt.

En outre, les cuticules comportent entre 55 et 90%, avantageusement entre 60 et 85%, de préférence entre 65 et 80% en poids de protéines sur le poids sec total de cuticules.

Dans le cadre de la présente demande, par « protéines », on vise la quantité de protéines brutes. La quantification des protéines brutes est bien connue de l'homme du métier. A titre d'exemple, on peut citer la méthode Dumas ou la méthode Kjeldhal. De préférence, la méthode Kjeldhal est utilisée.

On notera toutefois que cette méthode se base sur la mesure de la teneur en azote. Or, la chitine contient de l'azote à une teneur de l'ordre de 8%. Par conséquent, la teneur en azote de la chitine a été déduite de la teneur en azote mesurée avant d'effectuer la conversion permettant d'obtenir la teneur en protéines.

Les cuticules comportent entre 0,5 et 30%, avantageusement entre 1 et 20%, de préférence entre 5 et 15% en poids de glucides sur le poids sec total de cuticules.

La teneur en glucides a été calculée par mesure de différence des glucides. Selon cette méthode, la teneur en glucides est égale à la teneur en matière sèche à laquelle on soustrait la teneur en cendres, en protéines et en lipides.

En outre, les cuticules comportent de préférence au moins 0,08% en poids, plus préférentiellement au moins 0,1% en poids, encore plus préférentiellement au moins 0,12% en poids de tréhalose sur le poids sec total de cuticules.

La quantité de tréhalose est déterminée par analyse par GC-MS. Une telle analyse est plus amplement décrite à l'Exemple 1 ci-après.

La partie molle obtenue dans l'étape 2 comporte entre 20 et 50% en poids de lipides, de préférence entre 30 et 40% en poids de lipides sur le poids sec total de la partie molle.

En outre, la partie molle comporte au moins 45%, de préférence au moins 48%, plus préférentiellement au moins 50% en poids de protéines sur le poids sec total de la partie molle.

### • Etape 3 : Maturation de la partie molle des insectes

La partie molle des insectes est ensuite, optionnellement, soumise à agitation dans une cuve.

Avantageusement, la maturation est réalisée pendant une durée comprise entre 15 minutes et 3 heures, de préférence pendant 1h.

Avantageusement, la maturation est réalisée à une température comprise entre 65 et 100°C, de préférence entre 85 et 100°C, plus préférentiellement à une température d'environ 90°C.

Cette étape permet de faciliter la séparation de la partie molle des insectes dans l'étape 4 ci-après.

De préférence, le procédé selon l'invention comprend une telle étape.

En particulier, aucune dilution de la partie molle des insectes dans un solvant tel que l'eau n'est nécessaire dans cette étape.

### • Etape 4 : Séparation de la partie molle en une fraction solide, une fraction aqueuse et une fraction huileuse

Cette étape a pour objectif de récupérer trois fractions à partir de la partie molle des insectes obtenue à l'étape 2 ou 3, à savoir une fraction solide, une fraction aqueuse, et une fraction huileuse.

Selon un premier mode de réalisation, cette étape de séparation de la partie molle est réalisée en deux sous-étapes.

Dans la première sous-étape, la partie molle des insectes est soumise à une décantation à l'aide d'un décanteur 2 phases, de sorte à obtenir une fraction solide et une fraction liquide.

Dans la deuxième sous-étape, la fraction liquide est soumise à une centrifugation, de sorte à récupérer une fraction huileuse et une fraction aqueuse.

Avantageusement, dans cette deuxième sous-étape, une centrifugeuse à assiettes est utilisée.

Selon un second mode de réalisation de l'étape 4, la partie molle des insectes est soumise à une décantation à l'aide d'un décanteur 3 phases, de sorte à obtenir directement une fraction aqueuse, une fraction huileuse et une fraction solide.

Des décanteurs 3 phases adaptés sont, par exemple, le Tricanter^{®} de la société Flottweg, ou les décanteurs 3 phases de la société GEA, tel que le décanteur CA 225-03-33.

Avantageusement, la séparation de la partie molle est réalisée selon le second mode de réalisation.

En effet, l'utilisation d'un décanteur 3 phases permet d'obtenir une séparation des phases particulièrement efficace. Plus particulièrement, la fraction solide obtenue présente une haute teneur en matière sèche, la fraction aqueuse comporte peu de sédiments insolubles (provenant de la fraction solide) et d'huile, et la fraction huileuse comporte peu de sédiments insolubles (provenant de la fraction solide) et d'eau.

### • Etape 5 : Concentration de la fraction aqueuse

La fraction aqueuse obtenue à l'étape 4 est ensuite optionnellement concentrée, pour obtenir une fraction aqueuse concentrée.

Avantageusement, la concentration est réalisée par évaporation.

Avantageusement, l'évaporation est réalisée à une température comprise entre 30 et 100°C, de préférence entre 60 et 80°C.

De préférence, l'évaporation est réalisée à une pression comprise entre 50 et 1013 mbars, de préférence à 1013mbars.

L'évaporation est de préférence réalisée pendant une durée comprise entre 5 et 20 minutes.

La concentration est de préférence réalisée à l'aide d'un évaporateur à film tombant, d'un évaporateur à plaque à flot montant, ou d'un évaporateur à couche mince.

Ce type de matériel standard peut être utilisé sans rencontrer de problème d'encrassement, grâce notamment à la faible quantité de sédiments présents dans la fraction aqueuse.

Généralement, les fractions aqueuses ne peuvent être concentrées au-delà de 42% en matière sèche, car celles-ci ont tendance à gélifier (eau de colle) à partir de cette concentration.

Dans le cas de la présente invention, la fraction aqueuse comporte des protéines solubles de petite taille (au moins 45% des protéines solubles de la fraction aqueuse ont une taille inférieure à 550 g/mol, comme plus amplement décrit ci-après), ce qui permet d'éviter la gélification et ainsi d'obtenir une fraction aqueuse à haute concentration en matière sèche (jusqu'à 70%) et présentant une viscosité inférieure à 30000 cPs (centipoises).

Par « protéines solubles », on entend, parmi les protéines brutes, celles qui sont solubles dans une solution aqueuse dont le pH est compris entre 6 et 8, avantageusement entre 7,2 et 7,6.

Lorsque le terme « protéines » est utilisé dans la présente demande, il désigne des protéines brutes.

De préférence, la solution aqueuse est une solution tampon dont le pH est compris entre 6 et 8, avantageusement entre 7,2 et 7,6. Préférentiellement, la solution tampon est une solution tampon phosphate NaCl, dont le pH est égal 7,4 +/- 0,2.

En outre, l'étape de concentration de la fraction aqueuse présente un double intérêt, car elle permet :
- une économie de vapeur : en l'absence de l'étape 5 de concentration, l'eau devrait être évaporée lors de l'étape 7 de séchage décrite ci-après, avec un sécheur dont la consommation spécifique de vapeur est plus importante que celle d'un concentrateur tel que décrit ci-avant ; et
- d'éviter les contaminations microbiologiques, grâce à une réduction du volume et de la pression osmotique due à la forte concentration en matière sèche de la fraction aqueuse concentrée.

### • Etape 6 : Mélangeage de la fraction aqueuse concentrée et/ou des cuticules avec la fraction solide

Tout ou partie des cuticules obtenues à l'étape 2 et/ou tout ou partie de la fraction aqueuse concentrée obtenue à l'étape 5 peuvent/peut être optionnellement mélangée(s) à la fraction solide obtenue à l'étape 4 pour obtenir un mélange.

Avantageusement, le mélange est homogénéisé de sorte à faciliter son traitement ultérieur.

Les mélangeurs pouvant être utilisés sont par exemple des mélangeurs à vis conique, tels que ceux de la société Vrieco-Nauta^{®}, ou des mélangeurs pendulaires, tels que ceux de la société PMS.

On notera qu'en moyenne, pour un kilogramme de fraction solide obtenue, on obtient de 500 à 650g de cuticules, par exemple environ 550g, et de 250 à 350g de fraction aqueuse, par exemple environ 300g.

### • Etape 7 : Séchage de la fraction solide obtenue à l'étape 4 ou du mélange obtenu à l'étape 6

La fraction solide obtenue à l'étape 4 ou le mélange obtenu à l'étape 6 peuvent être séchés pour obtenir une fraction solide sèche ou un mélange sec.

Avantageusement, le séchage est réalisé à l'aide d'un sécheur à disques, un sécheur tubulaire, un sécheur à hélices, un sécheur de type flash, un sécheur à couche mince ou un sécheur à atomisation.

De préférence, le séchage est réalisé à l'aide d'un sécheur à disques ou tubulaire.

Des sécheurs tubulaires adaptés sont par exemple ceux de la société Tummers (Simon Dryers Technology).

Des sécheurs à disques adaptés sont par exemple ceux de la société Haarslev.

Le séchage peut être réalisé entre 1 et 10 heures, de préférence entre 3 et 5 heures.

Avantageusement, le séchage est réalisé à une température comprise entre 60 et 225°C, de préférence entre 80 et 100°C.

De préférence, l'évaporation est réalisée à une pression atmosphérique.

### • Etape 8 : Broyage de la fraction solide sèche ou du mélange sec obtenu à l'étape 7

Suite au séchage, un broyage peut être réalisé et une poudre est obtenue.

Par « poudre », on entend une composition sous forme de particules.

De préférence, la poudre est une poudre d'insectes, c'est-à-dire une poudre préparée uniquement à partir d'insectes et éventuellement d'eau.

Un broyeur tel qu'un broyeur à marteau ou un broyeur conique (tel que les broyeurs coniques (« Kek cône mills ») de la société Kemutec) peut par exemple être utilisé.

Avantageusement, à l'issue de ce broyage, la taille des particules est inférieure à 0,5 cm (plus grande taille de particule observable à l'aide d'un microscope), de préférence de l'ordre de 1 mm. Plus particulièrement, la taille de particules est comprise entre 300 µm et 1 mm, encore plus préférentiellement entre 500 et 800 µm.

Lorsque la poudre est broyée à une taille de particules acceptable pour l'alimentation humaine ou animale, celle-ci peut être désignée sous l'appellation « farine » et notamment « farine d'insectes » (« insect meal », en anglais). Par « taille de particules acceptable pour l'alimentation humaine ou animale », on vise une taille de particules comprise entre 100 µm et 1,5 mm, préférentiellement comprise entre 300 µm et 1 mm, plus préférentiellement entre 500 et 800 µm.

Selon que les étapes 5 et/ou 6 optionnelles est/sont mise(s) en oeuvre ou non, différentes poudres peuvent être obtenues, à savoir :
- une poudre résultant uniquement de la fraction solide (étape 6 non mise en oeuvre) ;
- une poudre résultant du mélange de la fraction solide et de tout ou partie des cuticules ;
- une poudre résultant du mélange de la fraction solide et de tout ou partie de la fraction aqueuse concentrée ;
- une poudre résultant du mélange de la fraction solide, de tout ou partie des cuticules et de tout ou partie de la fraction aqueuse concentrée.

La présente demande divulgue également les produits issus du procédé selon l'invention.

La présente demande divulgue en outre une fraction solide susceptible d'être obtenue par le procédé de traitement d'insectes selon l'invention.

La présente demande divulgue également une fraction solide comprenant au moins 71% en poids de protéines et entre 0,1 et 2% en poids de chitine, les pourcentages en poids étant indiqués sur le poids sec total de la fraction solide.

De préférence, la fraction solide comprend au moins 73% en poids, plus préférentiellement au moins 74% en poids, encore plus préférentiellement au moins 75% en poids de protéines, les pourcentages en poids étant indiqués sur le poids sec total de fraction solide.

Avantageusement, la fraction solide comprend entre 0,5 et 1,7% en poids de chitine sur le poids sec total de fraction solide.

Avantageusement, la fraction solide comprend entre 5 et 17% en poids de lipides, de préférence entre 10 et 15% en poids de lipides, sur le poids sec total de fraction solide.

De préférence, la fraction solide comprend entre 1 et 10% en poids, de préférence entre 2 et 6% en poids de cendres, sur le poids sec total de fraction solide.

La méthode de détermination de la teneur en cendres est bien connue de l'homme du métier. De préférence, les cendres ont été déterminées selon la méthode relevant du règlement CE 152/2009 du 27-01-2009.

En outre, la fraction solide comporte de préférence entre 5 et 15% en poids, plus préférentiellement entre 7 et 13% en poids de glucides sur le poids sec total de fraction solide.

Plus particulièrement, la fraction solide comporte de préférence au moins 0,2% en poids, plus préférentiellement au moins 0,3% en poids, encore plus préférentiellement au moins 0,35% en poids de tréhalose sur le poids sec total de fraction solide.

Par ailleurs, la digestibilité des protéines chez l'homme et les animaux est fortement conditionnée par la taille des protéines. En nutrition animale, il est courant de réduire la taille des protéines, afin de faciliter la digestion des animaux. Cette réduction de la taille des protéines se fait généralement par des procédés d'hydrolyse (par exemple enzymatique), dont la mise en oeuvre est particulièrement coûteuse.

La fraction solide comporte des protéines solubles dont la taille est suffisamment réduite pour faciliter la digestion des animaux.

Avantageusement, au moins 75%, préférentiellement au moins 80%, plus préférentiellement au moins 85% des protéines solubles de la fraction solide ont une taille inférieure ou égale à 12400 g/mol.

Plus particulièrement, au moins 55%, de préférence au moins 60%, plus préférentiellement au moins 65% des protéines solubles de la fraction solide ont une taille inférieure à 550 g/mol.

La présente demande divulgue également une fraction aqueuse susceptible d'être obtenue par le procédé de traitement d'insectes selon l'invention.

La présente demande divulgue en outre une fraction aqueuse comprenant au moins 48% en poids de protéines, au moins 2% en poids de tréhalose, et présentant une teneur en lipides inférieure à 7% en poids, les pourcentages en poids étant indiqués sur le poids sec total de la fraction aqueuse.

De préférence, la fraction aqueuse comporte au moins 55% en poids, plus préférentiellement au moins 60% en poids, encore plus préférentiellement au moins 65% en poids de protéines, sur le poids sec total de la fraction aqueuse.

Avantageusement, la fraction aqueuse comporte au moins 2,5% en poids, plus préférentiellement au moins 3% en poids de tréhalose sur le poids sec total de la fraction aqueuse.

De préférence, la fraction aqueuse présente une teneur en lipides inférieure à 6% en poids, plus préférentiellement inférieure à 4% en poids, encore plus préférentiellement inférieure à 2% en poids, sur le poids sec total de la fraction aqueuse.

Avantageusement, la fraction aqueuse comprend entre 5% et 20% en poids de cendres, de préférence entre 7% et 15% en poids de cendres sur le poids sec total de la fraction aqueuse.

En outre, la fraction aqueuse comporte moins de 2% en poids de sédiments insolubles, de préférence moins de 1% en poids de sédiments insolubles, sur le poids total de la fraction aqueuse.

La fraction aqueuse ne comporte pas de chitine.

Similairement à la fraction solide, la fraction aqueuse comporte des protéines solubles dont la taille est suffisamment réduite pour faciliter la digestion des animaux.

Avantageusement, au moins 90%, préférentiellement au moins 95%, plus préférentiellement au moins 97% des protéines solubles de la fraction aqueuse ont une taille inférieure ou égale à 12400 g/mol.

Plus particulièrement, au moins 45%, de préférence au moins 50%, plus préférentiellement au moins 53% des protéines solubles de la fraction aqueuse ont une taille inférieure à 550 g/mol.

Plus particulièrement, la fraction aqueuse a une teneur en matière sèche comprise entre 5 et 15% en poids sur le poids total de fraction aqueuse.

Lorsqu'elle est concentrée, la fraction aqueuse concentrée a une teneur en matière sèche comprise entre 55 et 75% en poids sur le poids total de fraction aqueuse concentrée.

La présente demande divulgue également une fraction aqueuse concentrée susceptible d'être obtenue par le procédé de traitement d'insectes selon l'invention, ledit procédé de traitement comportant alors l'étape optionnelle de concentration.

La présente demande divulgue en outre une fraction huileuse susceptible d'être obtenue par le procédé de traitement d'insectes selon l'invention.

La présente demande divulgue également une poudre susceptible d'être obtenu par le procédé de traitement d'insectes comprenant les étapes suivantes :
- la séparation des cuticules de la partie molle des insectes,
- la séparation de la partie molle des insectes en une fraction huileuse, une fraction solide et une fraction aqueuse,
- optionnellement, la concentration de la fraction aqueuse,
- optionnellement, le mélangeage de la fraction solide avec :
   - tout ou partie la fraction aqueuse concentrée ; et/ou
   - tout ou partie des cuticules,
   pour obtenir un mélange,
- le séchage de la fraction solide ou du mélange pour obtenir une fraction solide sèche ou un mélange sec, respectivement ;
- le broyage de la fraction solide sèche ou du mélange sec.

Ce procédé de traitement d'insectes peut comporter en outre une ou plusieurs des caractéristiques décrites ci-avant.

La présente demande divulgue plus particulièrement une poudre susceptible d'être obtenu par le procédé de préparation d'une poudre, et notamment d'une poudre d'insectes, selon l'invention, tel que décrit ci-avant.

Comme indiqué ci-avant, selon que les étapes 5 et/ou 6 optionnelles du procédé de traitement d'insectes selon l'invention, à savoir l'étape de concentration de la fraction aqueuse et l'étape de mélangeage de tout ou partie des cuticules et/ou de tout ou partie de la fraction aqueuse concentrée, avec la fraction solide, est/sont ou n'est/ne sont pas mise(s) en oeuvre, et le cas échéant selon les conditions de leur mise oeuvre, différentes poudres peuvent être obtenues.

La présente demande divulgue en outre une poudre, et notamment une poudre d'insectes, comprenant au moins 71% en poids de protéines et entre 0,1 et 4% en poids de chitine, les pourcentages en poids étant indiqués sur le poids sec total de poudre.

De préférence, cette poudre a une teneur en protéines supérieure ou égale à 72% en poids, plus préférentiellement supérieure ou égale à 74% en poids, encore plus préférentiellement supérieure ou égale à 75% en poids, sur le poids sec total de poudre.

Plus particulièrement, cette poudre a une teneur en chitine comprise entre 0,5 et 3% en poids, plus préférentiellement comprise entre 0,8 et 2% en poids, encore plus préférentiellement comprise entre 0,8 et 1,7% en poids sur le poids sec total de poudre.

De préférence, cette poudre comprend entre 5 et 20% en poids, de préférence entre 7 et 17% en poids de lipides, sur le poids sec total de poudre.

Plus particulièrement, cette poudre comprend entre 1 et 10% en poids, de préférence entre 2 et 6% en poids de cendres, sur le poids sec total de poudre.

En outre, cette poudre comporte de préférence entre 3 et 20% en poids de glucides sur le poids sec total de poudre.

Plus particulièrement, cette poudre comporte de préférence au moins 0,1% en poids, plus préférentiellement au moins 0,2% en poids de tréhalose sur le poids sec total de poudre.

Lorsque les étapes 5 et/ou 6 optionnelles n'est/ne sont pas mise(s) en oeuvre, une poudre, et notamment une poudre d'insectes, résultant uniquement de la fraction solide est obtenue.

Cette poudre comprend au moins 71% en poids de protéines et entre 0,1 et 2% en poids de chitine, les pourcentages en poids étant indiqués sur le poids sec total de poudre.

De préférence, cette poudre a une teneur en protéines supérieure ou égale à 72% en poids, plus préférentiellement supérieure ou égale à 74% en poids, encore plus préférentiellement supérieure ou égale à 75% en poids, sur le poids sec total de poudre.

Plus particulièrement, cette poudre a une teneur en chitine comprise entre 0,5 et 1,7% en poids de chitine, sur le poids sec total de poudre.

De préférence, cette poudre comprend entre 5 et 17% en poids, de préférence entre 10 et 15% en poids de lipides, sur le poids sec total de poudre.

Plus particulièrement, cette poudre comprend entre 1 et 10% en poids, de préférence entre 2 et 6% en poids de cendres, sur le poids sec total de poudre.

En outre, cette poudre comporte de préférence entre 5 et 15% en poids, plus préférentiellement entre 7 et 13% en poids de glucides sur le poids sec total de poudre.

Plus particulièrement, cette poudre comporte de préférence au moins 0,2% en poids, plus préférentiellement au moins 0,3% en poids, encore plus préférentiellement au moins 0,35% en poids de tréhalose sur le poids sec total de poudre.

Lorsque les étapes 5 et 6 du procédé selon l'invention sont mises en oeuvre, une poudre résultant du mélange de la fraction solide, de tout ou partie des cuticules et de tout ou partie de la fraction aqueuse concentrée peut également être obtenue.

La présente demande divulgue donc en outre une poudre, et notamment une poudre d'insectes, comprenant au moins 65% en poids de protéines, au moins 10% en poids de glucides et entre 0,1 et 2% en poids de chitine, les pourcentages en poids étant indiqués sur le poids sec total de poudre.

De préférence, cette poudre a une teneur en protéines supérieure ou égale à 70% en poids, plus préférentiellement supérieure ou égale à 74% en poids, sur le poids sec total de poudre.

Plus particulièrement, cette poudre a une teneur en chitine comprise entre 0,2 et 1,5% en poids, plus préférentiellement entre 0,5 et 1,3% en poids, sur le poids sec total de poudre.

De préférence, cette poudre a une teneur en glucides supérieure ou égale à 12% en poids, plus préférentiellement supérieure ou égale à 14% en poids, sur le poids sec total de poudre.

Plus particulièrement, cette poudre comporte de préférence au moins 0,7% en poids, plus préférentiellement au moins 0,9% en poids, encore plus préférentiellement au moins 1% en poids, et encore plus préférentiellement au moins 1,2% en poids de tréhalose sur le poids sec total de poudre.

De préférence, cette poudre comprend entre 5 et 15% en poids, de préférence entre 7 et 13% en poids de lipides, sur le poids sec total de poudre.

Plus particulièrement, cette poudre comprend entre 3 et 10% en poids, de préférence entre 4 et 8% en poids de cendres, sur le poids sec total de poudre.

Le taux d'humidité résiduel des poudres selon l'invention est compris entre 2 et 15%, de préférence entre 5 et 10%, plus préférentiellement, entre 4 et 8%. Ce taux d'humidité peut par exemple être déterminé selon la méthode issue du règlement CE 152/2009 du 27-01-2009 (103 °C / 4 h).

Avantageusement, les protéines des poudres présentent une digestibilité supérieure ou égale à 85% en poids sur le poids total de protéines brutes.

La digestibilité est une digestibilité pepsique mesurée par la méthode décrite dans la directive 72/199/CE.

De préférence, la digestibilité est supérieure ou égale à 88%, plus préférentiellement, supérieure ou égale à 92%.

La présente demande divulgue en outre l'utilisation d'une fraction aqueuse, d'une fraction aqueuse concentrée, ou de la poudre comprenant au moins 65% de protéines, au moins 10% en poids de glucides et entre 0,1 et 2% en poids de chitine décrite ci-avant, en tant qu'arôme, avantageusement dans l'alimentation animale.

La présente demande divulgue enfin l'utilisation d'une poudre dans l'alimentation, de préférence dans l'alimentation animale.

D'autres caractéristiques et avantages de l'invention, apparaîtront dans les exemples qui suivent, donnés à titre illustratif, avec référence à :

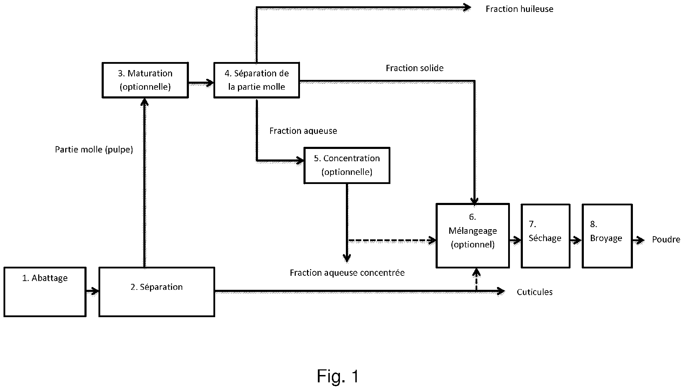

- La Figure 1, qui est un schéma illustrant le procédé détaillé de traitement d'insectes selon l'invention.

### EXEMPLE 1 : Procédé de traitement d'insectes selon l'invention

Des larves de *Tenebrio molitor* ont été utilisées. A réception des larves, ces dernières peuvent être stockées à 4°C pendant 0 à 15 jours dans leurs bacs d'élevages avant l'abattage sans dégradation majeure. Le poids des larves (âge) utilisées est variable et par conséquent leur composition peut varier, comme cela est illustré dans le Tableau 1 ci-après :

**Tableau 1 : Composition biochimique des larves de Tenebrio molitor selon leur poids.**

| **Biomasse (insectes)** | **mg** | **23** | **35** | **58** | **80** | **108** | **154** |
|---|---|---|---|---|---|---|---|
| **Matière sèche** | %* | 34 | 34 | 34,2 | 37,9 | 39,6 | 39,5 |
| **Cendres** | %* | 1,59 | 1,52 | 1,6 | 1,75 | 1,67 | 1,43 |
| **Protéines brutes** | %* | 22,6 | 22,2 | 22 | 23,2 | 23,1 | 23,2 |
| **Lipides** | %* | 6,62 | 6,88 | 7,98 | 10,3 | 10,9 | 11,7 |

| | | | | | | | |
|---|---|---|---|---|---|---|---|
| * Les % sont exprimés en poids sec sur le poids humide de larves. | | | | | | | |

### • Etape 1 : Abattage des insectes

Les larves vivantes (+4°C à + 25°C) sont convoyées en couche d'épaisseur comprise entre 2 et 10 cm, sur un tapis à bande perforé (1mm) jusqu'à une chambre de blanchiment. Les insectes sont ainsi blanchis à la vapeur (buses ou lit de vapeur) à 98°C sous ventilation forcée ou bien à l'eau à 92-95°C (buses d'aspersion) ou en mode mixte (eau + vapeur). Le temps de séjour dans la chambre de blanchiment est compris entre 5 secondes et 15 minutes, idéalement 5 min.

La température des larves en sortie de blanchiment est comprise entre 75°C et 98°C.

### • Etape 2 : Séparation de la partie molle des cuticules des insectes

Les larves, une fois blanchies, sont convoyées jusqu'à la trémie d'alimentation d'un séparateur à bande, afin de séparer les cuticules de la partie molle des larves.

Avantageusement, la séparation s'effectue immédiatement après l'abattage de manière à ce que les larves n'aient pas le temps de refroidir à température ambiante.

Le séparateur à bande utilisé est un séparateur à bande 601 de la société Baader.

Le diamètre des perforations du tambour est de 1,3 mm.

La partie molle des insectes est récupérée dans une cuve.

Les cuticules sont récupérées à l'aide d'un couteau racleur.

### Détermination de la quantité de tréhalose des cuticules

La quantité de tréhalose dans les cuticules récupérées à l'étape 2 a été mesurée de la façon suivante :
Le tréhalose est analysé par GC-MS.

Programme de température : 150 °C, suivi d'une rampe à 10 °C/min jusqu'à 260 °C, après 5 minutes à cette température, une rampe de 25 °C/min jusqu'à 310 °C et maintien de cette température pendant 2 minutes. Température de l'injecteur : 280 °C, de l'interface : 250 °C, le ratio de split est de 10, le volume de l'injection est de 1 µL. Par exemple, une colonne sH-RXI-5mS, 30 m x 0,25 mm x 0,25 µm est utilisée.

La préparation de l'échantillon pour analyse est réalisée de façon suivante : une quantité précise de l'échantillon (entre 10 et 300 mg) est pesée dans un tube Falcon, 9.75 mL de méthanol y sont ajoutés ainsi que 250 µL d'une solution de standard interne (myo-inositol, 25 µg/mL) dans le DMSO. Le mélange est agité à 80 °C pendant 10 minutes, 100 µL de BSTFA sont alors ajoutés et le mélange réactionnel est agité pendant 30 minutes supplémentaires à température ambiante, 1 mL d'acétonitrile est alors ajouté et l'échantillon ainsi préparé injecté sur un appareil de GC-MS.

La quantité mesurée est de 1,2 mg de tréhalose par g de matière sèche.

### • Etape 3 : Maturation de la partie molle des insectes

La partie molle des insectes est laissé à reposer dans la cuve de récupération de l'étape 2, sous agitation pendant 1h et à une température d'environ 90°C.

### • Etape 4 : Séparation de la partie molle en une fraction solide, une fraction aqueuse et une fraction huileuse

La partie molle est ensuite séparée en trois fractions à l'aide d'un décanteur trois phases. Le décanteur utilisé est le Tricanter^{®} Z23 de chez Flottweg.

Conditions de la séparation :
- Débit : jusqu'à 500Kg/h;
- Vt bol : 4806 t/mm (3000G) ;
- Y min : 5% (1,4 t/mm).

Trois fractions sont obtenues à l'issue de cette phase de séparation : une fraction huileuse, une fraction solide, et une fraction aqueuse.

Ces fractions présentent les caractéristiques indiquées dans le Tableau 2 suivant :

**Tableau 2 : Caractéristiques de la fraction huileuse, de la fraction solide et de la fraction aqueuse.**

| | Matière Sèche (%) | Protéines (%)* | Huile (%)* | Cendres (%)* | Glucides (%)* |
|---|---|---|---|---|---|
| Fraction solide | 56 | 74,1 | 12,9 | 4 | 10 |
| Fraction Aqueuse | 10 | 57 | 4 | 9 | 23 |
| Fraction huileuse | >99,5 | <0,5 | >99,5 | <0,25 | <0,25 |

| | | | | | |
|---|---|---|---|---|---|
| * Résultats moyens calculés sur plusieurs échantillons de chacune des fractions, exprimés sur le % de matière sèche | | | | | |

### Détermination de la taille des protéines solubles de la fraction solide et de la fraction aqueuse

Préparation de l'échantillon solide (fraction solide) : 30 mg de l'échantillon sont solubilisés dans 1 L de phase mobile et filtrés utilisant le filtre chromafil xtra PES-45/25.

Préparation de l'échantillon liquide (fraction aqueuse) : 400 µL sont solubilisés dans 1600 µL de la phase mobile et filtrés utilisant le filtre Chromafil xtra PES-45/25, juste avant l'injection. 1,5 mL de l'échantillon ainsi préparé sont centrifugés pendant 15 min à 12000 rpm (10625g).

Les conditions de mise en oeuvre de la chromatographie (HPLC Nexera XR de Shimadzu) sont les suivantes : la colonne utilisée est une Superdex Peptide GL 10/300 (GE Healthcare), la détection est réalisée par un détecteur DAD à 215 nm, la vitesse de la phase mobile est de 0,3 mL/min et elle est composée de ACN (acétonitrile)/H₂O/TFA (acide trifluoroacétique) (30/70/0,1), l'analyse est réalisée à 25 °C.

La distribution de taille des protéines solubles de la fraction solide est présentée dans le Tableau 3 ci-dessous :

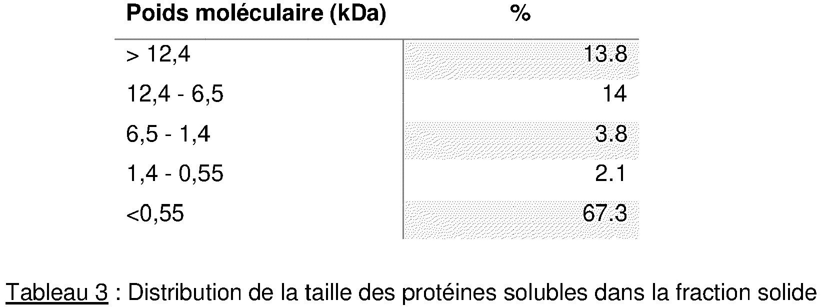

La distribution de taille des protéines solubles de la fraction aqueuse est présentée dans le Tableau 4 ci-dessous :

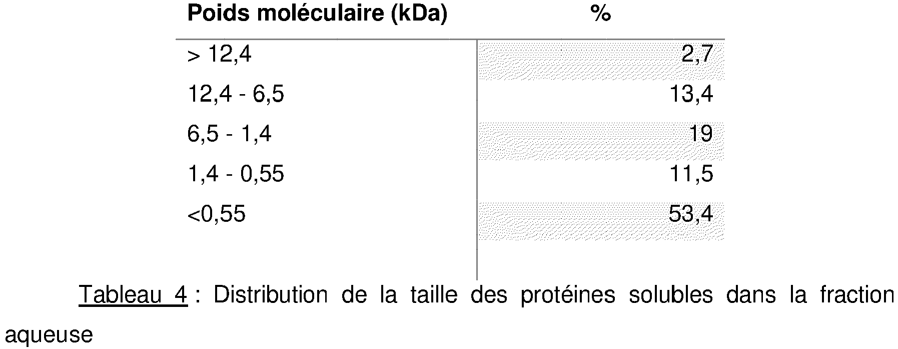

### Détermination de la quantité de tréhalose dans la fraction solide et la fraction aqueuse

La quantité de tréhalose dans ces fractions a été mesurée de la façon suivante :
Le tréhalose est analysé par GC-MS.

Programme de température : 150 °C, suivi d'une rampe à 10 °C/min jusqu'à 260 °C, après 5 minutes à cette température, une rampe de 25 °C/min jusqu'à 310 °C et maintien de cette température pendant 2 minutes. Température de l'injecteur : 280 °C, de l'interface : 250 °C, le ratio de split est de 10, le volume de l'injection est de 1 µL.

La préparation de l'échantillon pour analyse est réalisée de façon suivante : une quantité précise de l'échantillon (entre 10 et 300 mg) est pesée dans un tube Falcon, 9.75 mL de méthanol y sont ajoutés ainsi que 250 µL d'une solution de standard interne (myo-inositol, 25 µg/mL) dans le DMSO. Le mélange est agité à 80 °C pendant 10 minutes, 100 µL de BSTFA sont alors ajoutés et le mélange réactionnel est agité pendant 30 minutes supplémentaires à température ambiante, 1 mL d'acétonitrile est alors ajouté et l'échantillon ainsi préparé injecté sur un appareil de GC-MS.

La quantité mesurée dans la fraction solide est de 3,82 mg de tréhalose par g de matière sèche.

La quantité mesurée dans la fraction aqueuse est de 33,2 mg de tréhalose par g de matière sèche.

En outre, la fraction aqueuse comporte moins de 1% en poids de sédiments insolubles sur le poids total de la fraction aqueuse.

### • Etape 5 : Concentration de la fraction aqueuse

La fraction aqueuse obtenue à l'étape 4 est ensuite concentrée par évaporation, à l'aide d'un évaporateur à flot tombant.

La fraction aqueuse concentrée obtenue a une concentration en matière sèche d'environ 65%.

### • Etape 6 (optionnel): Mélangeage de la fraction aqueuse concentrée et/ou des cuticules avec la fraction solide

L'étape 6 n'a pas été mise en oeuvre dans cet Exemple.

### • Etape 7 : Séchage de la fraction solide

La fraction solide obtenue à l'étape 4 est séchée à l'aide d'un sécheur à disque de la société Haarslev pendant 5h afin d'obtenir une fraction solide sèche ou un mélange sec.

D'un point de vue microbiologique, la fraction solide comporte moins de 10 UFC/g d'entérobactéries.

### • Etape 8 : Broyage

La fraction solide sèche est enfin broyée à l'aide d'un broyeur à marteau continu (6 mobiles réversibles - épaisseur 8 mm). Le broyeur est alimenté par une trémie avec trappe de réglage de débit (180kg/h). La grille perforée utilisée pour contrôler la granulométrie en sortie est de 0,8 mm. La vitesse de rotation du moteur est de 3000tr/min *(motorisation électrique, puissance absorbée 4kW (5,5 CV)).*

Les caractéristiques d'une poudre d'insectes obtenue sont présentées dans le Tableau 5 ci-après.

**Tableau 5 : Caractéristiques d'une poudre d'insectes obtenue dans l'Exemple 1.**

| Protéines | Chitine | Cendres | Lipides | Glucides | Tréhalose |
|---|---|---|---|---|---|
| 75,1% | 1,3% | 4% | 12,5% | 10% | 0,38% |

| | | | | | |
|---|---|---|---|---|---|
| * Les pourcentages indiqués sont des pourcentages en poids sur le poids sec total de la poudre d'insectes. | | | | | |

### EXEMPLE 2 : Procédé de traitement d'insectes selon l'invention

Les étapes 1 à 5 ont été mises en oeuvre tel que cela est décrit dans l'Exemple 1.

### • Etape 6 (optionnel): Mélangeage de la fraction aqueuse concentrée et des cuticules avec la fraction solide

La totalité (100%) de la fraction aqueuse concentrée obtenue à l'étape 5, ainsi que 0,05% en poids des cuticules récupérées à l'étape 2 ont été mélangés à la totalité de la fraction solide obtenue à l'étape 4, pour obtenir un mélange.

Un mélangeur à vis conique de la société Vrieco-Nauta^{®} a été utilisé.

### • Etape 7 : Séchage du mélange

Le mélange obtenu à l'étape 6 est séché à l'aide d'un sécheur à disque de la société Haarslev pendant 5h afin d'obtenir un mélange sec.

D'un point de vue microbiologique, le mélange sec comporte moins de 10 UFC/g d'entérobactéries.

### • Etape 8 : Broyage

Le mélange sec est enfin broyé à l'aide d'un broyeur à marteau continu (6 mobiles réversibles - épaisseur 8 mm). Le broyeur est alimenté par une trémie avec trappe de réglage de débit (180kg/h). La grille perforée utilisée pour contrôler la granulométrie en sortie est de 0,8 mm. La vitesse de rotation du moteur est de 3000tr/min *(motorisation électrique, puissance absorbée 4kW (5,5 CV)).*

Les caractéristiques d'une poudre d'insectes obtenue sont présentées dans le Tableau 6 ci-après.

**Tableau 6 : Caractéristiques de la poudre d'insectes obtenue dans l'Exemple 2.**

| Protéines | Chitine | Cendres | Lipides | Glucides | Tréhalose |
|---|---|---|---|---|---|
| 66% | 1% | 6% | 11% | 13% | 1,1% |

| | | | | | |
|---|---|---|---|---|---|
| * Les pourcentages indiqués sont des pourcentages en poids sur le poids sec total de la poudre d'insectes. | | | | | |

## Revendications

1. Procédé de traitement d'insectes comprenant les étapes suivantes :
- la séparation des cuticules de la partie molle des insectes, puis
- la séparation de la partie molle des insectes en une fraction huileuse, une fraction solide et une fraction aqueuse.

2. Procédé selon la revendication 1, comprenant une étape de maturation de la partie molle des insectes, préalablement à l'étape de séparation de la partie molle des insectes en une fraction huileuse, une fraction solide et une fraction aqueuse.

3. Procédé selon l'une des revendications 1 ou 2, dans lequel la séparation des cuticules de la partie molle des insectes est effectuée à l'aide d'un filtre presse.

4. Procédé selon l'une des revendications 1 ou 2, dans lequel la séparation des cuticules de la partie molle des insectes est effectuée à l'aide d'un séparateur à bande.

5. Procédé selon l'une quelconque des revendications 1 à 4, comprenant une étape de concentration de la fraction aqueuse.

6. Procédé selon l'une quelconques des revendications 1 à 5, comprenant en outre une étape de mélangeage de la fraction solide avec :
- tout ou partie la fraction aqueuse concentrée ; et/ou
- tout ou partie des cuticules,
pour obtenir un mélange.

7. Procédé selon l'une quelconque des revendications 1 à 6, comprenant une étape de séchage de la fraction solide ou du mélange pour obtenir une fraction solide sèche ou un mélange sec, respectivement.

8. Procédé selon la revendication 7, comprenant en outre une étape de broyage de la fraction solide sèche ou du mélange sec.

9. Procédé selon l'une quelconque des revendications 1 à 8, comprenant une étape d'abattage des insectes préalable à l'étape de séparation des cuticules de la partie molle.

10. Procédé selon la revendication 9, dans laquelle, suite à l'étape d'abattage, les insectes sont directement utilisés pour la mise en oeuvre de l'étape de de séparation des cuticules de la partie molle des insectes.

11. Procédé selon la revendication 2, dans lequel la maturation est réalisée à une température comprise entre 65°C et 100°C.

12. Procédé selon la revendication 2 ou 11, dans lequel aucune dilution dans un solvant n'est effectuée lors de la maturation.

## Patentansprüche

1. Verfahren zum Behandeln von Insekten, das die folgenden Schritte umfasst:
- Trennen der Insektenhäutchen von dem weichen Teil der Insekten, anschließend
- Trennen des weichen Teils der Insekten in einen öligen Anteil, einen festen Anteil und einen wässrigen Anteil.

2. Verfahren nach Anspruch 1, umfassend einen Schritt des Reifens des weichen Teils der Insekten vor dem Schritt des Trennens des weichen Teils der Insekten in einen öligen Anteil, einen festen Anteil und einen wässrigen Anteil.

3. Verfahren nach einem der Ansprüche 1 oder 2, wobei das Trennen der Insektenhäutchen von dem weichen Teil der Insekten mit Hilfe einer Filterpresse durchgeführt wird.

4. Verfahren nach einem der Ansprüche 1 oder 2, wobei das Trennen der Insektenhäutchen von dem weichen Teil der Insekten mit Hilfe eines Bandabscheiders durchgeführt wird.

5. Verfahren nach einem der Ansprüche 1 bis 4, umfassend einen Schritt des Konzentrierens des wässrigen Anteils.

6. Verfahren nach einem der Ansprüche 1 bis 5, ferner umfassend einen Schritt des Mischens des festen Anteils mit:
- dem gesamten konzentrierten wässrigen Anteil oder einem Teil davon; und/oder
- den gesamten Insektenhäutchen oder einem Teil davon,
um eine Mischung zu erhalten.

7. Verfahren nach einem der Ansprüche 1 bis 6, umfassend einen Schritt des Trocknens des festen Anteils oder der Mischung, um einen trockenen festen Anteil bzw. eine trockene Mischung zu erhalten.

8. Verfahren nach Anspruch 7, ferner umfassend einen Schritt des Mahlens des trockenen festen Anteils oder der trockenen Mischung.

9. Verfahren nach einem der Ansprüche 1 bis 8, umfassend einen Schritt des Tötens der Insekten vor dem Schritt des Trennens der Insektenhäutchen von dem weichen Teil.

10. Verfahren nach Anspruch 9, wobei die Insekten nach dem Schritt des Tötens direkt für das Durchführen des Schritts des Trennens der Insektenhäutchen von dem weichen Teil der Insekten verwendet werden.

11. Verfahren nach Anspruch 2, wobei das Reifen bei einer Temperatur zwischen 65 °C und 100 °C durchgeführt wird.

12. Verfahren nach Anspruch 2 oder 11, wobei beim Reifen keine Verdünnung mit einem Lösungsmittel durchgeführt wird.

## Claims

1. Process for treating insects comprising the following steps:
- separating the cuticles from the soft part of the insects, then
- separating the soft part of the insects into a fat fraction, a solid fraction and an aqueous fraction.

2. Process according to claim 1, comprising a step of maturation of the soft part of the insects, prior to the step of separating the soft part of the insects into a fat fraction, a solid fraction and an aqueous fraction.

3. Process according to one of claims 1 or 2, in which separating the cuticles from the soft part of the insects is carried out using a filter press.

4. Process according to one of claims 1 or 2, in which separating the cuticles from the soft part of the insects is carried out using a belt separator.

5. Process according to any one of claims 1 to 4, comprising a step of concentrating the aqueous fraction.

6. Process according to any one of claims 1 to 5, also comprising a step of mixing the solid fraction with:
- all or part of the concentrated aqueous fraction; and/or
- all or part of the cuticles,
in order to obtain a mixture.

7. Process according to any one of claims 1 to 6, comprising a step of drying the solid fraction or the mixture in order to obtain a dry solid fraction or a dry mixture, respectively.

8. Process according to claim 7, also comprising a step of grinding the dry solid fraction or the dry mixture.

9. Process according to any one of claims 1 to 8, comprising a step of killing the insects prior to the step of separating the cuticles from the soft part.

10. Process according to claim 9, in which, following the step of killing, the insects are directly used for implementing the step of separating the cuticles from the soft part of insects.

11. Process according to claim 2, in which the maturation is carried out at a temperature comprised between 65°C and 100°C.

12. Process according to claim 2 or 11, in which no dilution in a solvent is performed during the maturation.
